(19) **Europäisches Patentamt / European Patent Office / Office européen des brevets**

(11) **EP 4 529 648 B1**

(12) **EUROPEAN PATENT SPECIFICATION**

(45) Date of publication and mention of the grant of the patent:
**12.11.2025  Bulletin 2025/46**

(21) Application number: **22740794.7**

(22) Date of filing: **24.06.2022**

(51) International Patent Classification (IPC):
**G06F 21/60** (2013.01)   **G06F 21/64** (2013.01)
**G06F 21/62** (2013.01)

(52) Cooperative Patent Classification (CPC):
**G06F 21/64**

(86) International application number:
**PCT/EP2022/067364**

(87) International publication number:
**WO 2023/227231 (30.11.2023 Gazette 2023/48)**

(54) **SYSTEM AND COMPUTER-IMPLEMENTED METHOD FOR DETECTING DIGITAL FORGERIES IN PDF DOCUMENTS**

SYSTEM UND COMPUTERIMPLEMENTIERTES VERFAHREN ZUM ERKENNEN DIGITALER FÄLSCHUNGEN IN PDF-DOKUMENTEN

SYSTEME ET PROCEDE INFORMATIQUE DE DETECTION DE FAUX NUMERIQUES DANS DES DOCUMENTS PDF

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.05.2022  ES 202230436**

(43) Date of publication of application:
**02.04.2025  Bulletin 2025/14**

(73) Proprietor: **Fundación Centro Tecnoloxico de Telecomunicacions de Galicia**
**36214 Vigo (ES)**

(72) Inventors:
• **PÉREZ VIEITES, Diego**
  **36418 Atios (ES)**

• **GARCÍA NOGUEIRAS, Iván**
  **36860 Ponteareas (ES)**
• **NÚÑEZ TABOADA, Dolores María**
  **15172 Oleiros (ES)**

(74) Representative: **Clarke, Modet y Cía., S.L.**
**C/ Suero de Quiñones 34-36**
**28002 Madrid (ES)**

(56) References cited:
**CN-A- 113 806 292        US-A1- 2006 117 182
US-A1- 2008 177 799**

• **ETSI: "ISO 32000-2 FDIS", 12 January 2017 (2017-01-12), pages 1 - 950, XP014288100, Retrieved from the Internet <URL:http://www. docbox.etsi.org\ESI\ESI\05-CONTRIBUTIONS \2017\ESI(17)000008_ISO_32000-2_FDIS.pdf> [retrieved on 20170112]**

## Description

### Field of the Invention

The present invention relates to the field of information security and forgery detection, and in particular to the field of forgery detection in PDF documents.

### Background of the Invention

Digital fraud has increased in recent years thanks to the democratization of software tools and the rise of online processes. The modification of images, videos or documents is a relatively simple task, causing the attempted fraud to be within the reach of anyone with a computer. On the other hand, the PDF (Portable Document Format) format (ISO 32000-1) has become one of the most common formats when it comes to sharing documents. Today, there are many tools, both free and proprietary, that allow the generation and edition of PDFs. Until not long ago, editing PDF documents was not easy due to the lack of tools, making PDF a more reliable document format than other formats such as Word, which is why it has been massively extended for the sharing of "final" documents". However, the appearance of all the previously mentioned tools not only drives the use of this type of format even more, but also makes it easier for it to be used for fraudulent purposes.

In this way, purely digital processes, such as digital onboarding processes, and all processes that involve documentation and that are susceptible to fraud, such as in banking or insurance companies, need solutions that detect and prevent fraud from these fraud channels.

Several image forgery detection methods have been published, and different techniques have been proposed in the last decade. These methods are grouped in two types, active and passive approaches. The active forensics approaches require embedding additional information (such as digital watermarking or barcodes embeddings), while passive forensics approaches are more popular due to their wider application scenario since they do not need additional information, and have attracted increasing academic and industrial research interests.

Patent document US2006117182-A1 discloses a document authentication system that combines digital signature verification and visual comparison. Patent document US2008177799-A1 discloses a system and method for tamper detection in printed documents. Patent document CN113806292-A refers to a document management method and system for clinical trials.

Although the field of digital forgery detection has been widely studied by the research community, no publications or proposals have been found for the detection of digital forgeries made to documents in PDF format.

The present invention presents a new approach for the detection of digital forgeries in PDF files.

### Description of the Invention

The present invention refers to a computer-implemented method and system for detecting digital forgeries in PDF documents. Advantageously, to detect the forgeries the present invention does not require any additional information beyond the PDF document itself to be analyzed.

In the present invention, the forgery detection is made using the incremental updates included in the PDF document. The incremental updates are an update to a PDF file, a modification by which a modified copy of all objects to be updated are appended to the PDF file, while leaving the original objects intact. According to the definition provided in the PDF Reference, the contents of a PDF file can be updated incrementally, without rewriting the entire file. Changes are appended to the end of the file, leaving its original contents intact. The main advantage to updating a file in this way is that it enables small changes to a large document to be saved quickly. The incremental updates were exclusively created for purposes related to performance issues. The present invention uses however the incremental updates for other purposes, in particular for detecting editions in pdf files in the way described in the present disclosure.

The method comprises receiving an input document in PDF format; analyzing the input document to detect incremental updates; iteratively selecting a number $i$ of incremental updates last included in the input document, and for each iteration obtaining a previous version of the input document by removing the selected number $i$ of last incremental updates from the input document, detecting visual differences between the input document and the previous version and detecting regions in the documents containing the visual differences; and providing the regions detected in at least one iteration as an output.

The method may further comprise iteratively obtaining contents of the input document and of the previous version included within the regions; and providing as an output the contents obtained in at least one iteration.

The detection of visual differences between the input document and the previous version may comprise obtaining the documents in image format; synchronizing the pages of the documents to obtain corresponding pairs of images from each document; for each pair of images, generating a map image obtained as an absolute difference of the images; and applying binarization to each map image to obtain a binary image.

The step of obtaining contents included within the regions may comprise classifying each page including regions as a vectorial or a rasterized type; for pages of vectorial type, reading the pdf code of the page and detecting characters included within the regions; and for pages of rasterized type masking an image corresponding to the page with the obtained binary image of the page and applying optical character recognition to read the content in the masked image.

The step of detecting regions containing the visual differences may comprise detecting contours in each binary image; and delimiting rectangular regions from the detected contours.

The method may further comprise determining that the input document is a forged document when at least one region is detected.

In an embodiment, the iterations are performed until a total number N of incremental updates contained in the input document is reached.

The invention also refers to a system for detecting digital forgeries in PDF documents, the system comprising the following modules: an incremental update remover module, a document comparator module and an output module.

The incremental update remover module is configured to receive an input document in PDF format; analyze the input document to detect incremental updates; iteratively select a number $i$ of incremental updates last included in the input document, and for each iteration obtain a previous version of the input document by removing the selected number $i$ of last incremental updates from the input document.

The document comparator module is configured to, for each iteration, detect visual differences between the input document and the previous version and detect regions in the documents containing the visual differences.

The output module is configured to provide the regions detected in at least one iteration as an output.

In an embodiment, the system further comprises a read contents module configured to obtain, for each iteration, contents of the input document and of the previous version included within the regions; and wherein the output module is configured to provide as an output the contents obtained in at least one iteration.

The output module may be configured to determine that the input document is a forged document when at least one region is detected. The incremental update remover module may be configured to perform the iterations until a total number $N$ of incremental updates contained in the input document is reached.

The present invention also refers to a non-transitory computer-readable storage medium for detecting digital forgeries in PDF documents, comprising computer code instructions that, when executed by a processor, causes the processor to perform the computer-implemented method previously described.

## Brief Description of the Drawings

A series of drawings which aid in better understanding the invention and which are expressly related with an embodiment of said invention, presented as a non-limiting example thereof, are very briefly described below.

Figure 1 shows a flow diagram of a computer-implemented method for detecting digital forgeries in PDF documents according to an embodiment.

Figure 2 illustrates a block diagram of a system for detecting digital forgeries in PDF documents according to an embodiment of the present invention.

Figure 3 shows an example of an input document.

Figure 4 shows the corresponding example of a previous version of the input document of Figure 3 obtained at the output of the incremental update remover module.

Figures 5A and 5B show, respectively, a basic structure of a pdf file without incremental updates and with incremental updates.

Figures 6A, 6B, 6C and 6D show an example of a cross-reference table (Fig. 6A), a cross-reference stream (Fig. 6B), a hybrid-reference file (Fig. 6C) and a cross-reference table in a linearized document (Fig. 6D).

Figures 7A-7B depict a diagram of how to parse incremental updates following cross-reference table links, without a linearized table (Fig. 7A) and with a linearized table (Fig. 7B).

Figure 8 depicts a diagram of a document comparator module according to an embodiment.

Figure 9 shows an example of a map image obtained by the document comparator module for the input document shown in Figure 3.

Figure 10 shows an example of a clean map image created in the document comparator module using the map image of Figure 9.

Figure 11 depicts a block diagram of a read contents module according to an embodiment.

Figure 12 shows a diagram of the steps performed by a page classifier module according to an embodiment.

Figure 13 shows an example of an output detecting digital forgeries in the input document of Figure 3.

## Description of a Preferred Embodiment of the Invention

The present invention refers to a system and a computer-implemented method for detecting digital forgeries in PDF documents (i.e. PDF files containing documents in PDF format).

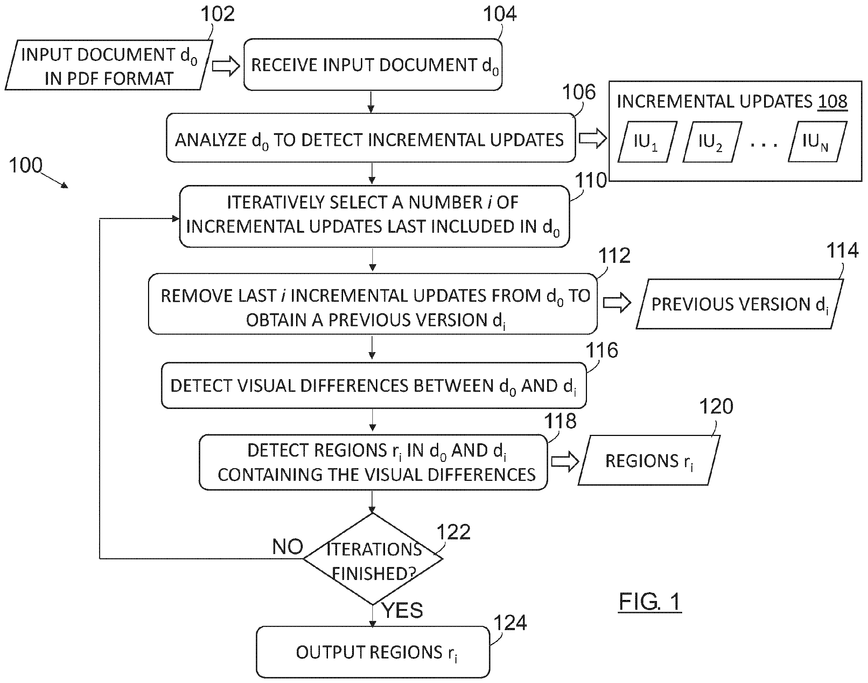

**Figure 1** illustrates a flow diagram of a computer-implemented method 100 for detecting digital forgeries in PDF documents according to an embodiment. The computer-implemented method 100 depicted in Figure 1 comprises the following steps:

- Receiving 104 an input document $d_0$ 102 in PDF format.

- Analyzing 106 the input document $d_0$ to detect incremental updates 108. For instance, N incremental updates are detected: incremental update $IU_1$, incremental update $IU_2$, ..., incremental update $IU_N$, wherein $IU_1$ is the first incremental update and $IU_N$ is the last incremental update.

- Iteratively selecting 110 a number $i$ of incremental updates last included in the input document $d_0$. For instance, in a first iteration, i=1 and the incremental update which was last included in input document $d_0$ (i.e. the latest one, incremental update $IU_N$) is first selected; in a second iteration, i=3 and the incremental updates selected for this iteration are $IU_N$, $IU_{N-1}$ and $IU_{N-2}$ (i.e. the last three incremental updates in input document $d_0$); in a last iteration, i=N and all the N incremental updates are selected. In an embodiment, the number $i$ selected for each iteration starts from 1 (first iteration) and is successively increased by 1 for each iteration until reaching N, with N being the total number of incremental updates detected (i=1; i=2; i=3, ...; i=N).

- For each iteration:

  • Obtaining 112 a previous version $d_i$ 114 of the input document $d_0$ 102 by removing the selected number $i$ of last incremental updates 108 from the input document $d_0$.

  • Detecting 116 visual differences between the input document $d_0$ 102 and the previous version $d_i$ 114.

  • Detecting 118 regions $r_i$ 120 in the documents $d_0$ and $d_i$ containing the visual differences.

- After each iteration, it is checked 122 whether the iterations are finished (no more iterations are required), and then the regions $r_i$ detected in at least one iteration are provided 124 as an output (i.e. outputting the regions $r_i$). For instance, three regions $r_1$, $r_2$ and $r_3$ are detected in the different iterations and all these three detected regions are provided as an output.

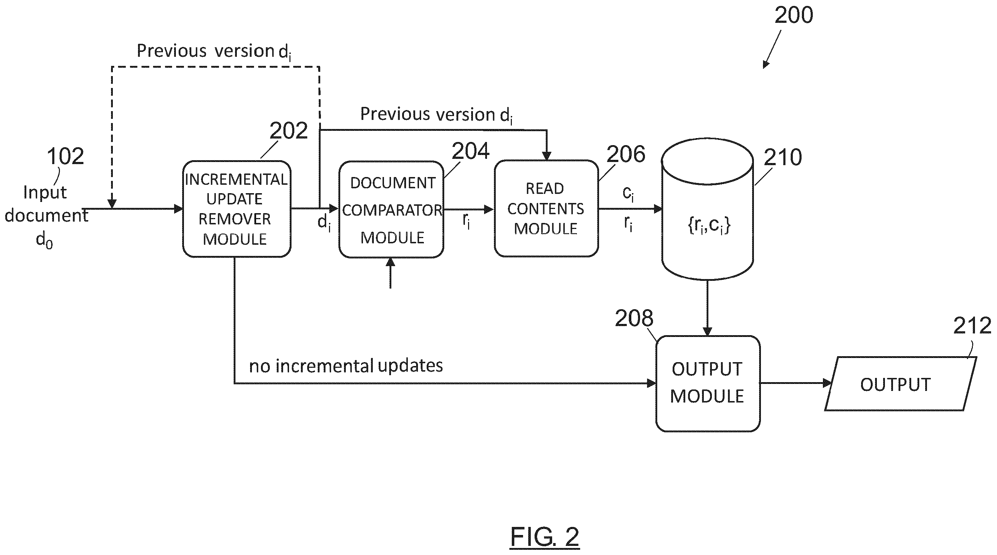

**Figure 2** depicts a general block diagram of a system 200 for detecting digital forgeries in PDF documents according to an embodiment of the present invention. The system 200 comprises an incremental update remover module 202, a document comparator module 204 and an output module 208, and optionally it may also include a read contents module 206. All these modules may be implemented within a same processing unit, such as a processor.

The incremental update remover module 202 takes as input a pdf document, input document $d_0$ 102, and looks for incremental updates 108 in the document. If the input document $d_0$ does not have any incremental updates inside, the incremental update remover module 202 informs the output module 208, which determines and outputs that the input document $d_0$ 102 is not a forged document. Otherwise, the incremental update remover module 202 removes the incremental update and generates a document without the last incremental update. This operation can be performed on any kind of PDF format, vectorial or raster. It must be taken into account that the PDF file could have more than one page, so that all the pages of the document must be analyzed in each of the system modules. The document returned by the incremental update remover module 202 is a previous version 114 of the document, denoted as $d_i$.

The document comparator module 204 takes the input document $d_0$ and the output of the incremental update remover module 202 (previous version $d_i$ 114) and compares the two documents for visual differences (note that both pdf files could be different but without visual differences; for instance, new resources could be added but not used). The document comparator module 204 detects the visual differences between both documents and returns a vector $r_i$ with the regions where the differences were found, wherein each region $r_i$ may be represented using four numbers, denoted as a rectangle $r_{i,m,j}=\{x_{i,m,j}, y_{i,m,j}, w_{i,m,j}, h_{i,m,j}\}$, where $r_{i,m,j}$ is the rectangular region number $j$ inside the page m detected in the incremental update $i$, $x_{i,m,j}$ and $y_{i,m,j}$, are the coordinates (x,y) of one vertex of the rectangular region, and $w_{i,m,j}$ and $h_{i,m,j}$ are respectively the width and height of the corresponding rectangular region.

Both documents ($d_0$, $d_i$) and the regions $r_i$ detected for the deletion of the incremental update $i$ may be used by the read contents module 206. This module reads the content of both documents and return the visual content located within the regions $r_i$, the contents in this positions are denoted as $c_i = \{c_{ia}, c_{ib}\}$, where $c_{ia}$ is the content obtained for the comparison of both documents when the incremental update $i$ is removed, and a indicates that the content was read from the oldest document and b indicates that the content was read from the newest. The outputs $r_i$ and $c_i$ are stored in a database 210 for the incremental update $i$ analysis. Of course, $c_i$ also keeps information for each page and region in the same way as the $r_i$ vector.

The document $d_i$ that has been generated previously by the incremental update remover module 202 is used as system input, and if the document $d_i$ still presents incremental updates, the process is repeated in several iterations. The iterations normally end when the document used as input of the incremental update remover module 202 does not have any incremental updates left ("no incremental updates" in Figure 2). In this case, the output module 208 access the database 210 to retrieve the stored results, where a list of regions $R=\{r_0,...,r_N\}$ and contents $C=\{c_0,...,c_N\}$ can be recovered for each incremental update $i \, c \, \{0,..., N\}$, where $N$ is the number of the incremental updates in the pdf file. With this information, the output module 208 provides as an output 212 the regions $r_i$ 120 and contents $c_i$ so that the visual differences produced in the pdf file can be easily detected since their positions and the contents that have been modified (and the previous values of the contents) is indicated in the output 212.

The read contents module 206 is an optional module. If this module is not present in the system 200, the regions $r_i$ are stored in the database 210, and the output module 208 only outputs the regions $r_i$ in the documents $(d_0,d_i)$ containing the visual differences. The output module 208 may be configured to determine and output that the input document $d_0$ is a forged document when at least one region $r_i$ is detected. Otherwise, if no region $r_i$ is detected, the document $d_0$ is not a forged document.

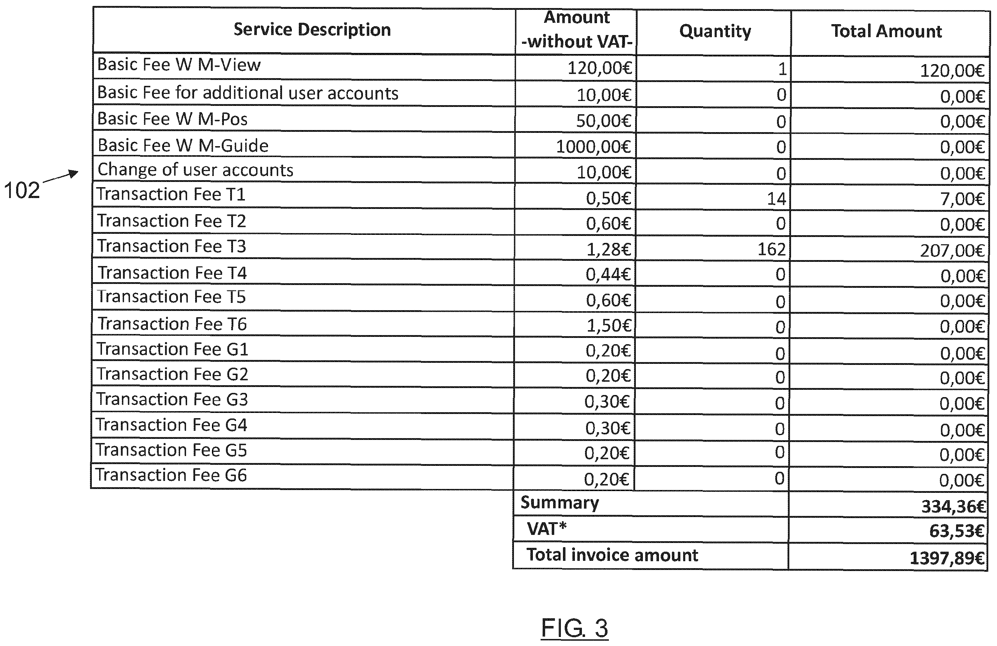

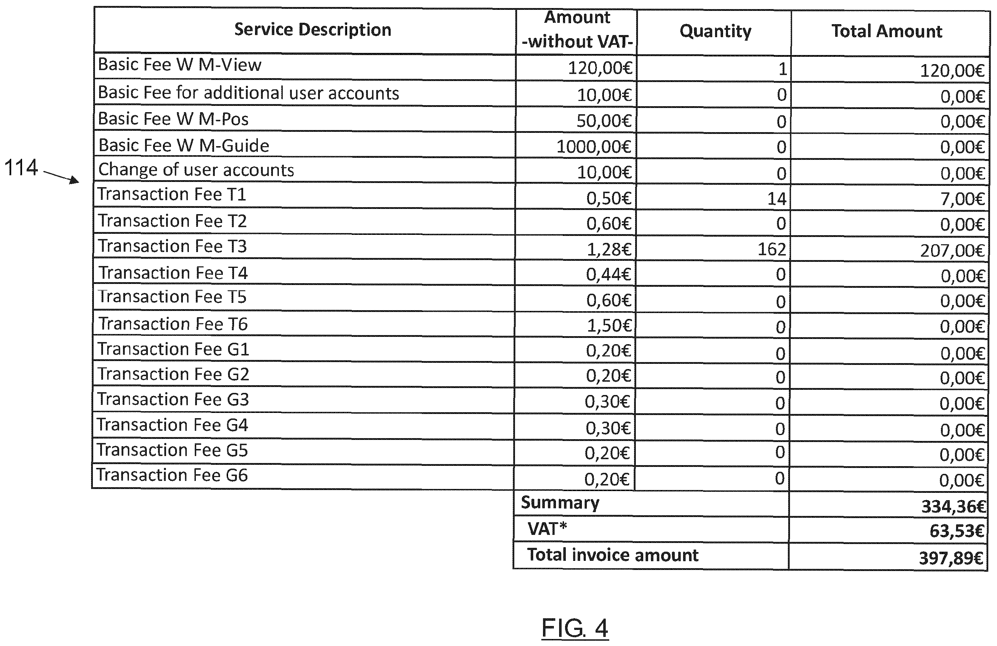

The incremental update remover module 202 determines if the document has one or more incremental updates, and in that case generates a new document without the changes added in the incremental updates. An example of an input document $d_0$ 102 and a previous version $d_i$ 114 is shown in **Figure 3** and **Figure 4,** respectively. In this example the total invoice amount, in the bottom part of the documents, has been edited ('1397,89 €' in $d_0$, '397,89 €' in $d_i$).

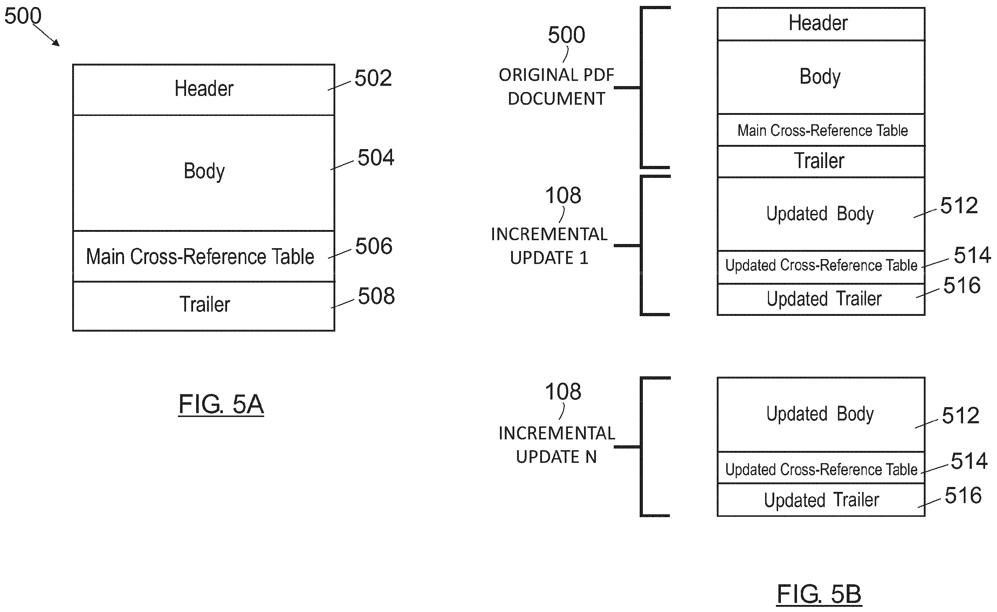

In order to describe how the incremental update remover module 202 removes the increments, it is necessary to make a brief description of how the pdf format works and how the increments are encoded. **Figure 5A** shows the internal structure of an original PDF document 500. A pdf document is internally organized as a collection of objects, which represent the elements visible in the document, as well as the internal structure, metadata, and other information that can be embedded in the file. These objects are indexed in a special table, a main cross-reference table 506 or Xref table, which references the position of each object inside the file. Additionally, the file also contains a header 502, with a version number of the pdf standard and other informative fields, a body 504 containing the objects or elements visible in the document, and a trailer 508, a special field at the end of the file indicating where the main cross-reference table 506 is located.

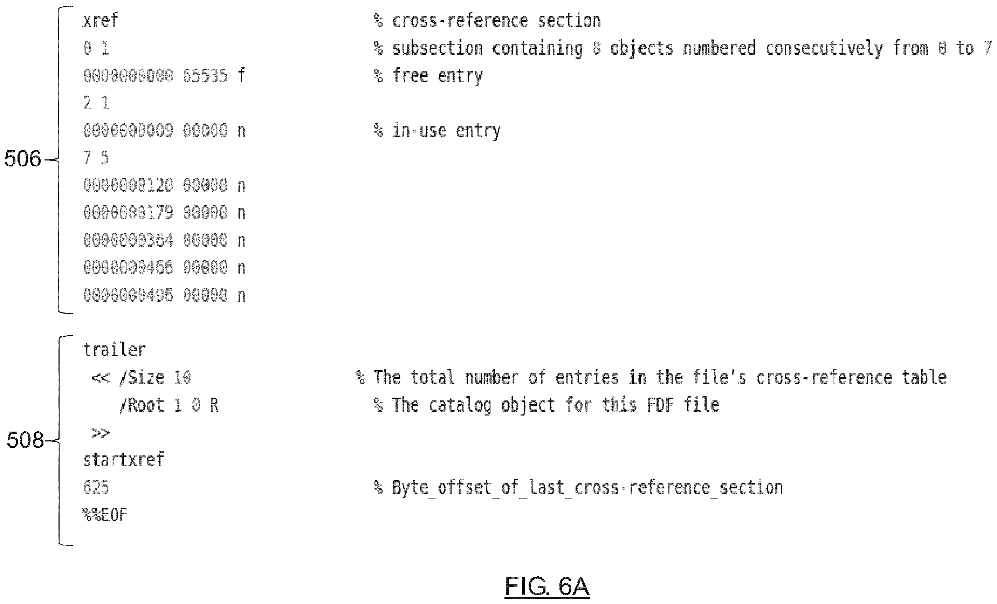

Each incremental update 108 adds over the original PDF document 500 not only the modified internal objects (updated body 512) but also an updated cross-reference table 514 indexing the new included objects and an updated trailer 516, as is depicted in **Figure 5B.** The updated cross-reference tables 514 added by an incremental update also include a link or reference to the previous cross-reference table in the file, so that a conforming PDF reader must start by the latest table and traverse the file backwards through the different modifications applied to reconstruct the up-to-date version of the document. An example of a main cross-reference table 506 and a trailer 508 is shown in **Figure 6A.**

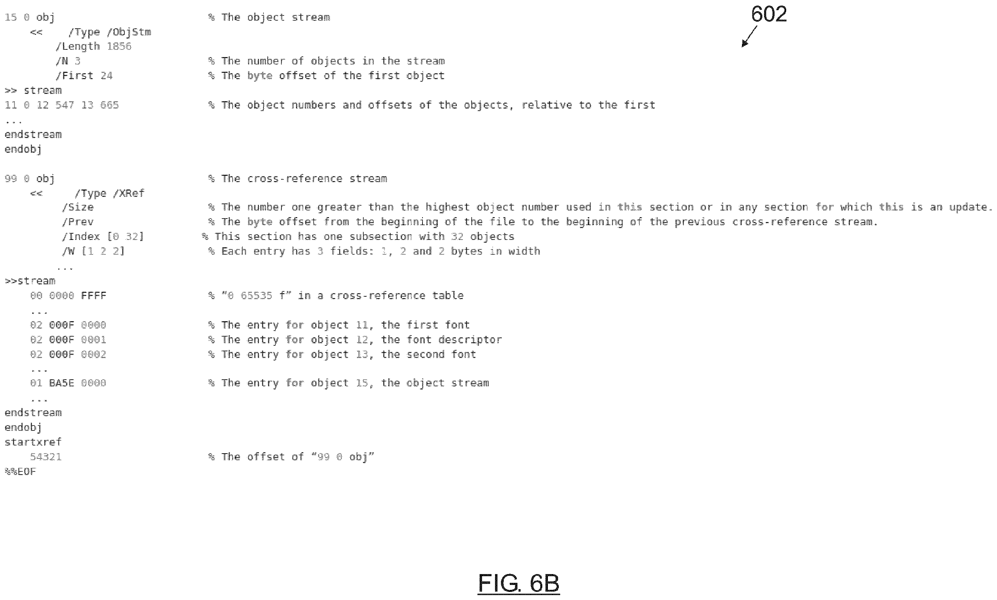

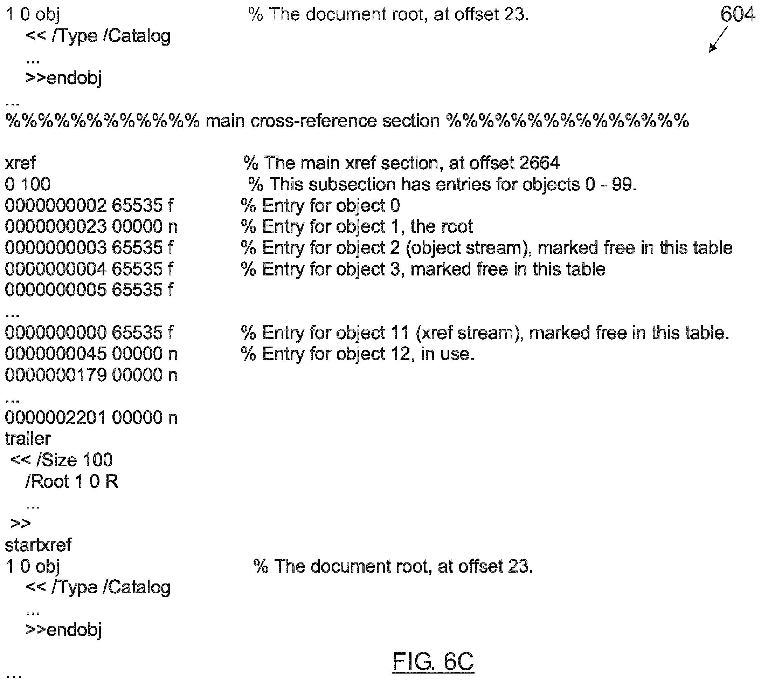

Furthermore, starting with version 1.5 of the PDF standard, a new type of xref called cross-reference streams 602 was added, a code example of a pdf with this type of table can be seen in **Figure 6B.** The cross-reference stream 602 provides a more compact representation of cross-reference information and the ability to access compressed objects that are stored in object streams. To maintain compatibility with tools that do not support the 1.5 version, another new xref type called hybrid-reference file 604 was created, an example is depicted in **Figure 6C.** The hybrid-reference file 604 contains objects referenced by standard cross-reference tables in addition to objects in object streams that are referenced by cross-reference streams. A PDF creator that uses the hybrid-reference format creates the main cross-reference table 506, the updated cross-reference table 514, and the cross-reference stream 602 at the same time.

It is necessary to consider all these types of cross-reference tables to be able to search in them (basic cross-reference table 506 of Figure 6A, cross-reference streams 602 of Figure 6B and hybrid-reference files 604 of Figure 6C). In addition, it is important to note that although combinations of different cross-reference types should not be made in the same document, it is a common practice in some editors (write and read those combinations) and PDF viewers (read those combinations).

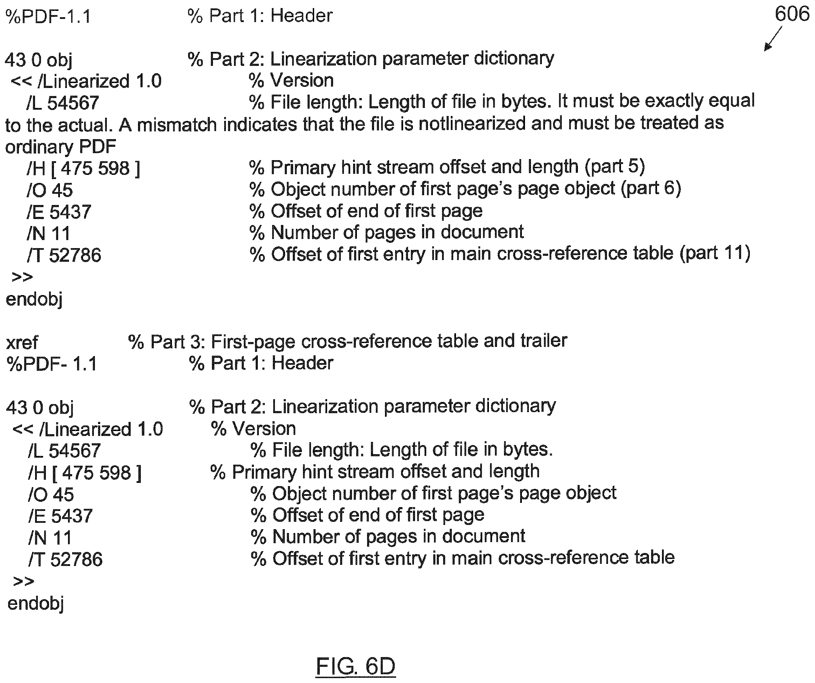

An additional step is required if the document is linearized. **Figure 6D** shows an example of a cross-reference table in a linearized document 606. This is a special option that allows the viewer to quickly load the first page of the document. This is especially relevant in the case of viewing it remotely, for example by opening the file from a web server. The cross-reference table is usually the last element in the document, so the browser must download the entire file to begin rendering the content. A linearized document 606 contains a shortened cross-reference table at the beginning, which references only those objects necessary to render the first page. This allows a compatible PDF reader to display the first page while continuing to download the file. This adds additional complexity when processing incremental updates, as this table must be discovered and combined with the corresponding table containing the other objects to form the full cross-reference table for that increment.

According to the PDF standard only the last table of the document should be linearized, but it is usual to keep applying incremental updates over an already linearized file and even linearize it again afterwards. This creates multiple fragmented tables in the document, as depicted in Fig. 6, which must be tracked and combined properly to generate the complete representation of the document as it were after each incremental update.

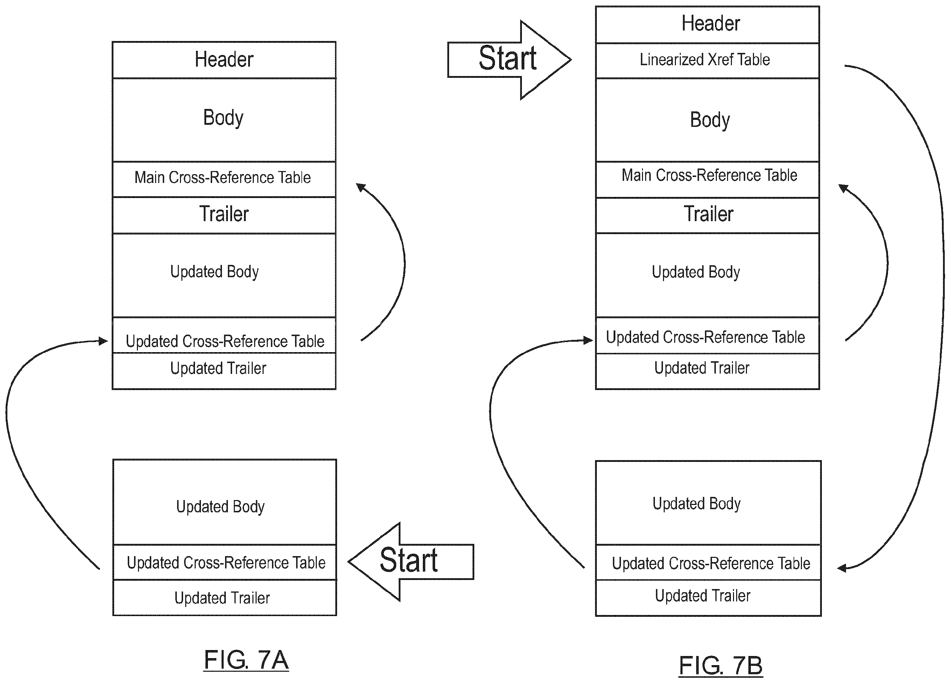

**Figures 7A** and **7B** depict a diagram of how to parse incremental updates following cross-reference table links without a linearized table (Figure 7A) and with a linearized table (Figure 7B). Taking into account the variability of options explained above about the definition of cross-reference tables, the incremental update remover module 202 has to navigate through them (since the new tables reference the old tables, as shown in Figure 7) to modify the pdf document so that the last updated trailer 516, last updated cross-reference table 514 and last updated body 512 are removed and set the previous cross-reference table so that it is read first by any PDF editor. This ensures that the data from the last incremental update is not referenced, and what is displayed in any viewer will be a previous version of the document, before it was modified.

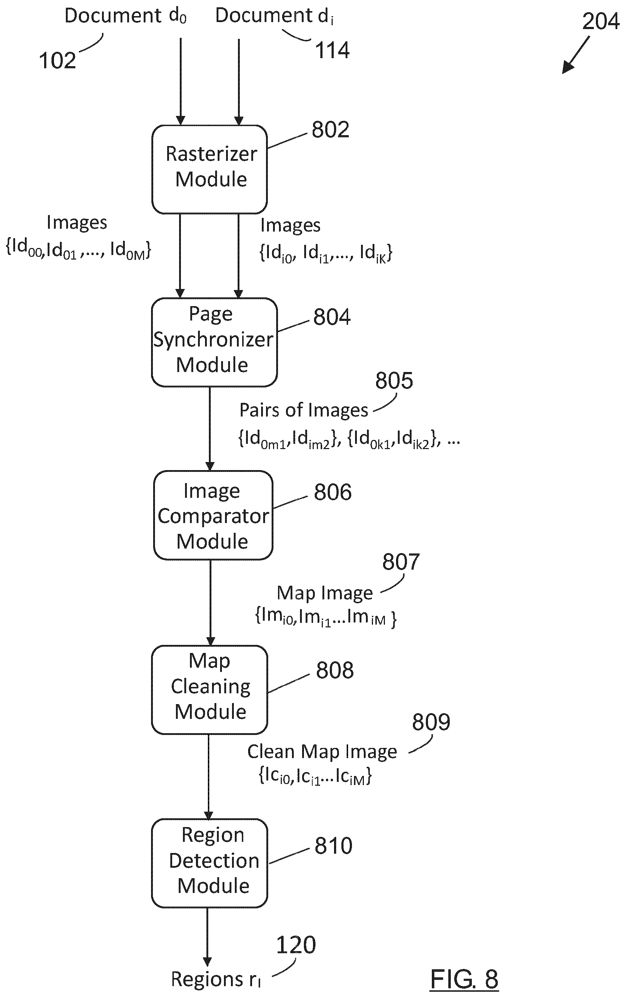

The next step after the incremental update removal involves using the document comparator module 204. The document comparator module 204 takes two versions of the same document (an input document $d_0$ and a previous version $d_i$) and makes a comparison between them in order to detect visual differences. This comparison could be made with different approaches; for instance, it can be implemented by reading the vectorial content of both documents $(d_0, d_i)$ and compare all elements, such us characters and their properties. However, it is preferable to use image processing since it allows to use the same method to deal with vectorial and rasterized pdfs. **Figure 8** depicts, according to an embodiment, the diagram of a document comparator module 204 based on image processing techniques involving image comparison.

In a first step, a rasterizer module 802 of the document comparator module 204 converts both documents $(d_0, d_i)$ into images. Since the documents could have more than one page, the output of the rasterizer module 802 is a list of images $\{Id_{00}, Id_{01}, ..., Id_{0M}\}$ for the document $d_0$ and a list of images $\{Id_{i0}, Id_{i1}, ..., Id_{iK}\}$ for the document $d_i$, where the last sub index indicates the page (for documents $d_0$ and $d_i$ with M and K pages, respectively). It takes into account that the documents could have different numbers of pages, for instance, if some page was added or removed in the incremental update. This first step is optional, since the pages of the documents may already be in rasterized format inside the pdf file, and in that case the rasterizer module 802 can be skipped and the process will be faster. In both cases, pdf documents in rasterized of vectorial formats, a list of images is obtained and sent to a page synchronizer module 804.

The page synchronizer module 804 is configured to receive the input document $d_0$ and the previous version $d_i$ in image format and synchronize the pages of the documents $(d_0, d_i)$ to obtain corresponding pairs of images 805 from each document $(d_0, d_i)$. If the number of pages of the compared documents $(d_0, d_i)$ does not match, it is a clear indication that the input document $d_0$ has been modified. This is solved in the page synchronizer module 804, which takes the visual content of the pages and compares it. By comparing the different pages, the page synchronizer module 804 can detect those pages that correspond to each other, which would be the ones with the least difference or without changes. This allows to identify which pages should be compared and which pages have been added or removed from the input document $d_0$. The output of this module is a list of pair of images 805 $\{Id_{0m1}, Id_{ik1}\}, \{Id_{0m2}, Id_{ik2}\}, ...\}$, where the first sub index indicates the document (0 for the input document $d_0$, or i for a previous version $d_i$ with the corresponding removed increments), and the second sub index indicates the page number of the document.

An image comparator module 806 then generates, for each pair of images 805, a map image 807 obtained as an absolute difference of the images. For each pair of images 805 $\{Id_{0m}, Id_{ik}\}$, where m and k are the same page of different document versions, the image comparator module 806 creates an image map $Im_{im}$, being $i$ the incremental update and m the page index.

The map is obtained using a simple absolute difference of the images.

$$Im_{im} = |Id_{0m} - Id_{ik}|$$

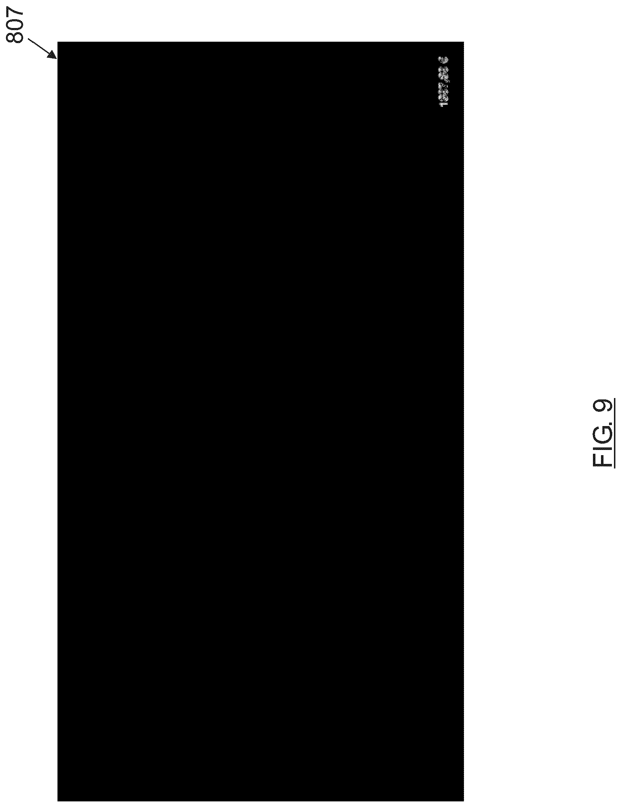

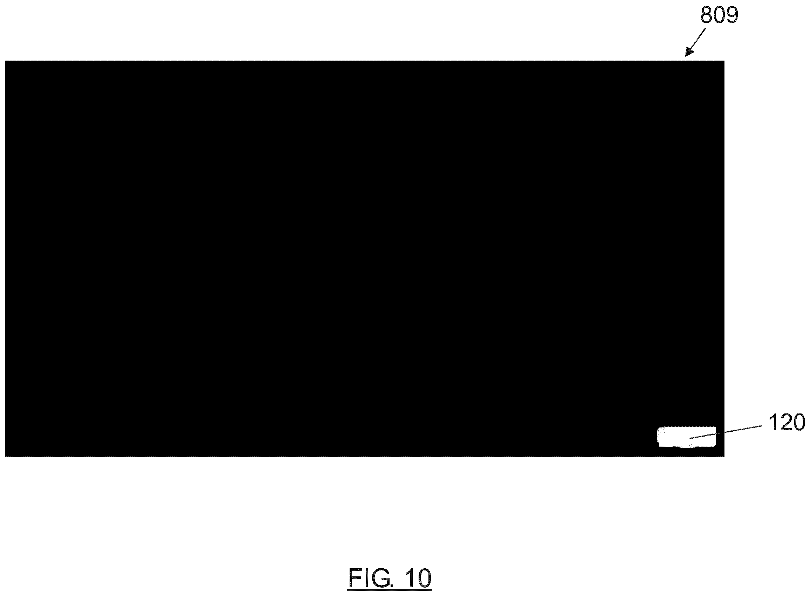

This difference creates a noisy map image that is cleaned in the next module, a map cleaning module 808. The map image 807 generated for the examples in Figures 3 and 4 is shown in **Figure 9.** The map cleaning module 808 is configured to apply binarization to each map image 807 to obtain a binary image (clean map image 809 $\{Ic_{i0}, Ic_{i1}, ..., Ic_{iM}\}$). In addition to a map binarization, a blur operation may also be performed by the map cleaning module 808. This creates a new clean version of the map image, clean map image 809, denoted as $Ic_{im}$ for each couple of images. The clean version of the map image 807 shown in Figure 9 is depicted in **Figure 10,** clean map image 809.

Next step involves detecting the regions in the clean map images 809 by a region detection module 810. The region detection module 810 is configured to detect regions containing the visual differences by detecting contours in each binary image and delimiting rectangular regions from the detected contours. Various detection algorithms may be used to detect these regions, such as Suzuki et al. algorithm (Suzuki, S. and Abe, K., "Topological Structural Analysis of Digitized Binary Images by Border Following", CVGIP 30 1, pp 32-46, 1985). This algorithm determines the surroundness relations among the borders of a binary image. Since the outer borders and the hole borders have a one-to-one correspondence to the connected components of 1-pixels and to the holes, respectively, this algorithm yields a representation of a binary image, from which one can extract some sort of features without reconstructing the image. The algorithm retrieves contours from the binary image delimiting the regions.

The output of the region detection module 810 is a vector $r_i$ with the regions 120 where the differences were found, wherein each region may for instance be represented with four numbers, denoted as a rectangle $r_{i,m}j=\{x_{i,m,j}, y_{i,m,j}, w_{i,m,j}, h_{i,m,j}\}$, where $r_{i,m,j}$ is the region number $j$ inside the page $m$ detected in the incremental update $i$.

These steps should be done over all the pairs of images 807, it should be repeated $min(K,M)$ times, M and K being the number of pages of $d_0$ and $d_i$, respectively.

The system 200 is not only capable of detecting forged regions, but it can also describe the forgeries made. With the regions and the different versions of the document generated in the previous modules, it is possible to return the previous values of the edited contents. This task is performed by the read contents module 206, which takes the original document (input document $d_0$, which is the oldest version of the document) and another newer version of the document (previous version $d_i$, generated by the incremental update remover module 202) and reads the existing visual contents in the regions detected regions in the document comparator module 204.

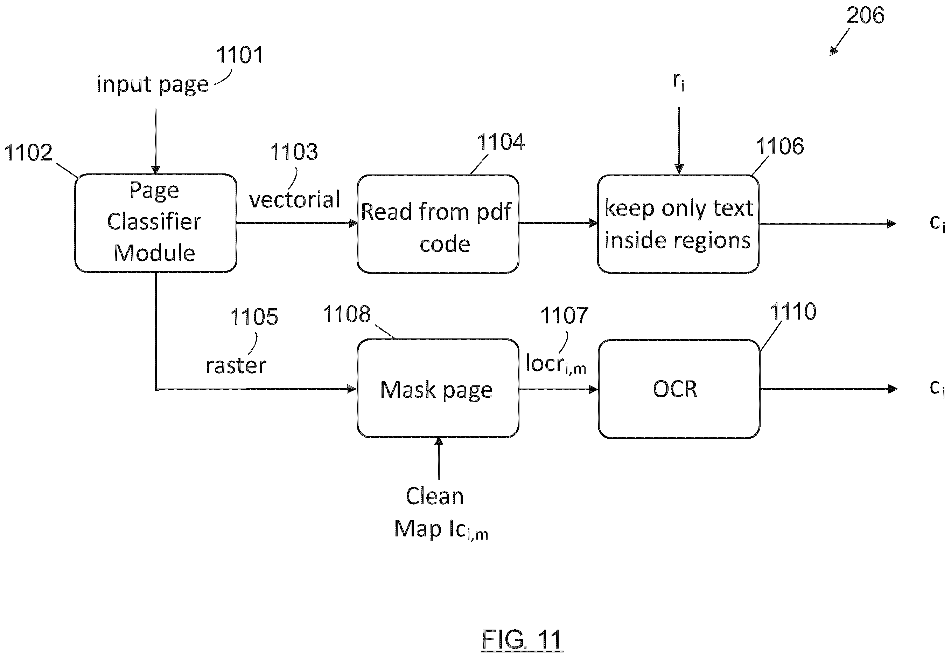

In order to read the contents of both documents, it is necessary to process rasterized and vectorial formats. Depending on the type of page (vectorial or rasterized) of the document, the process will be different. **Figure 11** depicts a block diagram of the read contents module 206 according to an embodiment.

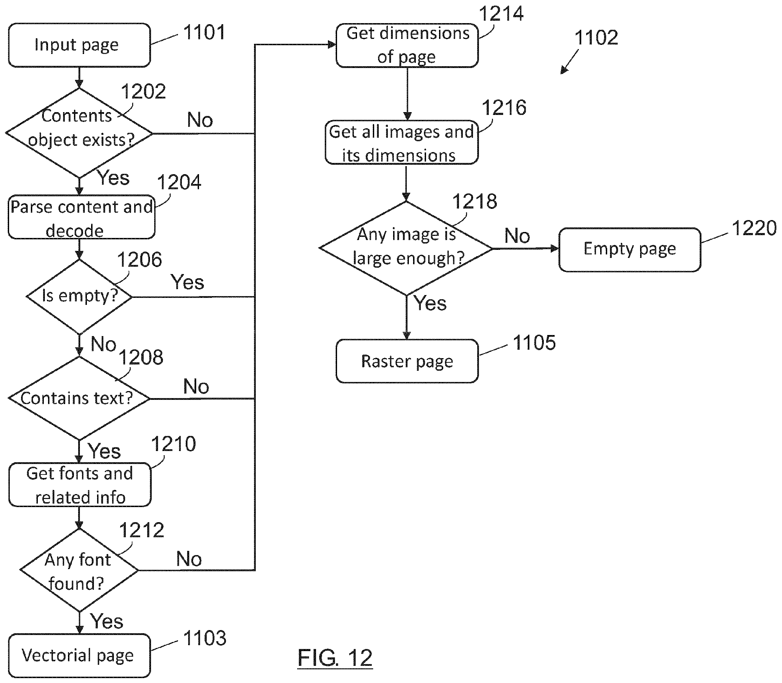

The read contents module 206 is configured to classify each single page (input page 1101) including detected regions as a vectorial page 1103 or a raster page 1105. To do that, a page level classifier, page classifier module 1102, may be used. **Figure 12** depicts a diagram of the steps carried out by a page classifier module 1102 according to an embodiment. The classifier is preferably based on a pdf interpreter. The interpreter checks 1202 if the contents object exists in the page structure of the input page 1101; if so, in step 1204 the interpreter parses the entire content of the input page 1101 and then decodes the content (which can be stream or array type). It is then checked 1206 whether the content is or not empty. If the content obtained is not empty, it is checked 1208 if it contains text or only contains elements of the pdf visualization-type, hidden information, etc. (for example, it may only contain information about the images in the pdf). Finally, if it contains text, all fonts and their related info are obtained 1210. It is then checked 1212 is any font is found. If this last operation is successful, it is decided that the input page 1101 is a page of vectorial type (i.e. a vectorial page 1103).

If any of the above conditions are unsuccessful, the input page 1101 is analyzed to check if the page is of raster type. To do that, the interpreter gets the dimensions 1214 of the page and looks for all embedded images (which can be placed in the Image or Form object) on the page. For each image, it gets the dimensions 1216 of the image on the page and checks 1218 if there is any image large enough to be a raster page. If so, the image is decoded and stored, and the input page 1101 is classified as a raster page 1105; Otherwise, the input page 1101 is classified as an empty page 1220.

If the input page 1101 processed by the page classifier module 1102 is in raster format, the module takes the map image 807 for the current page (already generated in the document comparator module 204 in order to obtain the map with the regions) and uses this map image as a mask. The read contents module 206 masks 1108 an image corresponding to the input page 1101 $Id_{ik}$ with the previously obtained binary image (clean map image 809 $Ic_{im}$) of the input page. This is done with a multiply operation, pixel by pixel (the clean map image $Ic_{im}$ is a binarized representation).

$$Iocr_{i,m}=|Ic_{im} * Id_{ik}|$$

The masked image $Iocr_{i,m}$ 1107 is an image with content only in the regions detected by the system as manipulated. The read contents module 206 then applies optical character recognition (OCR) 1110, such as Tesseract OCR, to read the content in the masked image 1107.

If the input page 1101 is in vectorial format, the read contents module 206 reads 1104 the pdf code of the page and detects 1106 text or characters included inside the regions. The content should be interpreted following the PDF reference manual. The content of a page is described in the content stream. The value may be either a single stream or an array of streams. If the value is an array, the effect is as if all of the streams in the array were concatenated, in order to form a single stream. A content stream can be uncoded or encoded with different filters.

The content stream does not only contain the text, but all the elements that allow the page to be seen as it is. To achieve this, the content stream consists of a sequence of instructions describing the graphical elements to be painted on a page. The objects in the content stream are intended to be interpreted and acted upon sequentially. There are more than 60 different operators to perform this task. The following text is an example of a content stream:

```
1 0 obj << /Length 568 >> stream
2 J BT /F1 12 Tf 0 Tc 0 Tw 72.5712 TD [(Unencoded
streams can be read easily) 65 (, )] TJ
0 - 14 TD [(b) 20 (ut generally tak) 10 (e more space
than \311)] TJT* (encoded streams.) Tj 0 - 28 TD
[(Se) 25 (v) 15 (eral encoding methods are a) 20 (v)
25 (ailable in PDF) 80 (.)] TJ 0 - 14 TD (Some are
used for compression and others simply) Tj T* [(to
represent binary data in an ) 55 (ASCII format.)] TJ T*
(Some of the compression encoding methods are
suitable ) Tj T* (for both data and images, while
```

others are suitable only ) Tj T* (for continuous-tone images.) Tj ET endstream endobj

In order to obtain the content of a page, it is necessary to read operator by operator with its operands and perform the operations described in each case. The operands may only be direct objects. In some cases, an operator needs to refer to a PDF object that is defined outside the content stream (for example, resources such as fonts). Those external objects are referenced by names, which must be accessed to obtain the necessary values to follow the interpretation of the content stream.

A conforming pdf reader, and by extension the read contents module 206, must read and interpret each of these instructions. By doing this process, all the elements present on the page are identified, with all the properties and characteristics required to perform the analysis, such as size or position in the page. Once this information is read, the read contents module 206 goes through each character to check if it is within the regions previously detected; in this case, it keeps the content to show it at the output of the module and/or store it on a database 210.

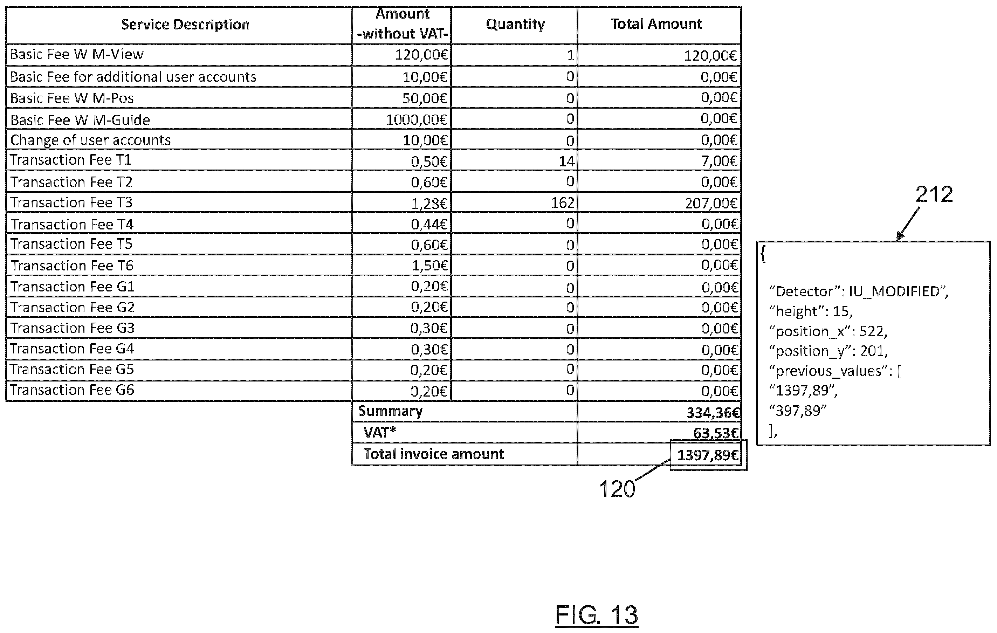

The output 212 of the system (provided by the output module 208) for the example of Figure 3 (image of the input document $d_0$), Figure 4 (output of the incremental update remover module 202), Figure 9 (map image 807) and Figure 10 (clean map image 809) is shown in **Figure 13**. The following output 212 is obtained:

```
"detector": "IU_MODIFIED",
"height": 15,
"position_x": 522,
"position_y": 201,
"previous_values": ["1397,89 ","397,89 "]
```

In particular, the position within the document of the region detected as modified and the values in this region for all versions of the document are obtained. In this case, 1397,89 (edited value) and 397,89 (original value).

## Claims

1. A computer-implemented method for detecting digital forgeries in PDF documents, comprising:

   receiving (104) an input document $d_0$ (102) in PDF format;
   analyzing (106) the input document $d_0$ (102) to detect incremental updates (108);
   iteratively selecting (110) a number *i* of incremental updates last included in the input document $d_0$ (102), and for each iteration:

   obtaining (112) a previous version $d_i$ (114) of

the input document $d_0$ (102) by removing the selected number *i* of last incremental updates (108) from the input document $d_0$ (102);
   comparing the input document $d_0$ (102) and the previous version $d_i$ (114) and detecting (116) differences between both documents; and
   detecting (128) regions $r_i$ (120) in the documents ($d_0,d_i$) containing the differences;

   providing (124) the regions $r_i$ (120) detected in at least one iteration as an output (212); and
   determining that the input document ($d_0$) is a forged document when at least one region ($r_i$) is detected.

2. The computer-implemented method of claim 1, comprising:

   iteratively obtaining contents ($c_i$) of the input document ($d_0$) and of the previous version ($d_i$) included within the regions ($r_i$); and
   providing as an output the contents ($c_i$) obtained in at least one iteration.

3. The computer-implemented method of any preceding claim, wherein detecting differences between the input document ($d_0$) and the previous version ($d_i$) comprises:

   obtaining the documents ($d_0,d_i$) in image format;
   synchronizing the pages of the documents ($d_0,d_i$) to obtain corresponding pairs of images from each document ($d_0,d_i$);
   for each pair of images, generating a map image obtained as an absolute difference of the images; and
   applying binarization to each map image to obtain a binary image.

4. The computer-implemented method of claim 2 and 3, wherein obtaining contents ($c_i$) included within the regions ($r_i$) comprises:

   classifying each page including regions ($r_i$) as a vectorial or a rasterized type;
   for pages of vectorial type, reading the pdf code of the page and detecting characters included within the regions ($r_i$); and
   for pages of rasterized type:

   masking an image corresponding to the page with the obtained binary image of the page; and
   applying optical character recognition to read the content in the masked image.

**5.** The computer-implemented method of claim 3 or 4, wherein detecting regions ($r_i$) containing the differences comprises:

> detecting contours in each binary image; and delimiting rectangular regions from the detected contours.

**6.** The computer-implemented method of any preceding claim, wherein the iterations are performed until a total number *N* of incremental updates contained in the input document ($d_0$) is reached.

**7.** A data processing system for detecting digital forgeries in PDF documents, comprising means for carrying out the computer-implemented method of any of claims 1 to 6.

**8.** A non-transitory computer-readable storage medium for detecting digital forgeries in PDF documents, comprising computer code instructions that, when executed by a processor, causes the processor to perform the computer-implemented method of any of claims 1 to 6.

**Patentansprüche**

**1.** Computerimplementiertes Verfahren zum Erkennen digitaler Fälschungen in PDF-Dokumenten, umfassend:

> Empfangen (104) eines Eingabedokuments $d_0$ (102) im PDF-Format;
> Analysieren (106) des Eingabedokuments $d_0$ (102), um inkrementelle Aktualisierungen (108) zu erkennen;
> iteratives Auswählen (110) einer Anzahl *i* von inkrementellen Aktualisierungen, die zuletzt in das Eingabedokument $d_0$ (102) enthalten wurden, und für jede Iteration:
>
>> Erhalten (112) einer vorhergehenden Version $d_i$ (114) des Eingabedokuments $d_0$ (102) durch Entfernen der ausgewählten Anzahl *i* der letzten inkrementellen Aktualisierungen (108) aus dem Eingabedokument $d_0$ (102);
>> Vergleichen des Eingabedokuments $d_0$ (102) und der vorhergehenden Version $d_i$ (114) und Erkennen (116) von Unterschieden zwischen beiden Dokumenten; und
>> Erkennen (128) von Regionen $r_i$ (120) in den Dokumenten ($d_0$,$d_i$), die die Unterschiede enthalten;
>> Bereitstellen (124) der Regionen $r_i$ (120), die in mindestens einer Iteration erkannt werden, als Ausgabe (212); und

> Bestimmen, dass das Eingabedokument ($d_0$) ein gefälschtes Dokument ist, wenn mindestens eine Region ($r_i$) erkannt wird.

**2.** Computerimplementiertes Verfahren nach Anspruch 1, umfassend:

> iteratives Erhalten von Inhalten ($c_i$) des Eingabedokuments ($d_0$) und der vorhergehenden Version ($d_i$), die in den Regionen ($r_i$) enthalten sind; und
> Bereitstellen der Inhalte ($c_i$), die in mindestens einer Iteration erhalten werden, als Ausgabe.

**3.** Computerimplementiertes Verfahren nach einem der vorhergehenden Ansprüche, wobei das Erkennen von Unterschieden zwischen dem Eingabedokument ($d_0$) und der vorhergehenden Version ($d_i$) Folgendes umfasst:

> Erhalten der Dokumente ($d_0$,$d_i$) im Bildformat;
> Synchronisieren der Seiten der Dokumente ($d_0$,$d_i$), um entsprechende Bildpaare aus jedem Dokument ($d_0$,$d_i$) zu erhalten;
> für jedes Bildpaar, Generieren eines Kartenbildes, das als absolute Differenz der Bilder erhalten wird; und
> Anwenden von Binarisierung auf jedes Kartenbild, um ein Binärbild zu erhalten.

**4.** Computerimplementiertes Verfahren nach Anspruch 2 und 3, wobei das Erhalten von Inhalten (ci), die in den Regionen ($r_i$) enthalten sind, Folgendes umfasst:

> Klassifizieren jeder Seite einschließlich Regionen ($r_i$) als Vektor- oder Rastertyp;
> für Seiten vom Vektortyp, Lesen des PDF-Codes der Seite und Erkennen von Zeichen, die in den Regionen ($r_i$) enthalten sind; und
> für Seiten vom Rastertyp:
>
>> Maskieren eines der Seite entsprechenden Bildes mit dem erhaltenen Binärbild der Seite; und
>> Anwenden von optischer Zeichenerkennung, um den Inhalt des maskierten Bildes zu lesen.

**5.** Computerimplementiertes Verfahren nach Anspruch 3 oder 4, wobei das Erkennen von Regionen ($r_i$), die die Unterschiede enthalten, Folgendes umfasst:

> Erkennen von Konturen in jedem Binärbild; und
> Abgrenzen rechteckiger Regionen aus den erkannten Konturen.

**6.** Computerimplementiertes Verfahren nach einem der vorhergehenden Ansprüche, wobei die Iterationen so lange durchgeführt werden, bis eine Gesamtanzahl N von inkrementellen Aktualisierungen, die im Eingabedokument ($d_0$) enthalten sind, erreicht ist.

**7.** Datenverarbeitungssystem zum Erkennen digitaler Fälschungen in PDF-Dokumenten, umfassend Mittel zum Durchführen des computerimplementierten Verfahrens nach einem der Ansprüche 1 bis 6.

**8.** Nichtflüchtiges, computerlesbares Speichermedium zum Erkennen digitaler Fälschungen in PDF-Dokumenten, umfassend Computercodeanweisungen, die, wenn sie durch einen Prozessor ausgeführt werden, den Prozessor veranlassen, das computerimplementierte Verfahren nach einem der Ansprüche 1 bis 6 durchzuführen.

**Revendications**

**1.** Procédé informatique de détection de faux numériques dans des documents PDF, comprenant :

recevoir (104) un document d'entrée $d_0$ (102) au format PDF ;
analyser (106) le document d'entrée $d_0$ (102) pour détecter des mises à jour incrémentielles (108) ;
sélectionner de manière itérative (110) un nombre *i* de mises à jour incrémentielles incluses en dernier dans le document d'entrée $d_0$ (102), et, pour chaque itération :

obtenir (112) une version précédente $d_i$ (114) du document d'entrée $d_0$ (102) en retirant le nombre *i* sélectionné de dernières mises à jour incrémentielles (108) du document d'entrée $d_0$ (102) ;
comparer le document d'entrée $d_0$ (102) et la version précédente $d_i$ (114) et détecter (116) des différences entre les deux documents ; et
détecter (128) des régions $r_i$ (120) dans les documents ($d_0$, $d_i$) contenant les différences ;
fournir (124) les régions $r_i$ (120) détectées dans au moins une itération en tant que sortie (212) ; et
déterminer que le document d'entrée ($d_0$) est un document falsifié lorsqu'au moins une région ($r_i$) est détectée.

**2.** Procédé informatique selon la revendication 1, comprenant :

obtenir de manière itérative le contenu ($c_i$) du document d'entrée ($d_0$) et de la version précédente ($d_i$) inclus dans les régions (n) ; et
fournir en tant que sortie le contenu ($c_i$) obtenu dans au moins une itération.

**3.** Procédé informatique selon l'une quelconque des revendications précédentes, dans lequel la détection de différences entre le document d'entrée ($d_0$) et la version précédente ($d_i$) comprend :

obtenir les documents ($d_0$, $d_i$) au format d'image ;
synchroniser les pages des documents ($d_0$, $d_i$) pour obtenir des paires d'images correspondantes à partir de chaque document ($d_0$, $d_i$) ;
pour chaque paire d'images, générer une image cartographique obtenue en tant que différence absolue des images ; et
appliquer une binarisation à chaque image cartographique pour obtenir une image binaire.

**4.** Procédé informatique selon la revendication 2 et 3, dans lequel l'obtention du contenu ($c_i$) inclus dans les régions ($r_i$) comprend :

classifier chaque page comportant des régions ($r_i$) comme un type vectoriel ou matriciel ;
pour des pages de type vectoriel, lire le code pdf de la page et détecter des caractères inclus dans les régions (n) ; et
pour des pages de type matriciel :

masquer une image correspondant à la page avec l'image binaire obtenue de la page ; et
appliquer une reconnaissance optique de caractères pour lire le contenu dans l'image masquée.

**5.** Procédé informatique selon la revendication 3 ou 4, dans lequel la détection de régions ($r_i$) contenant les différences comprend :

détecter des contours dans chaque image binaire ; et
délimiter des régions rectangulaires à partir des contours détectés.

**6.** Procédé informatique selon l'une quelconque des revendications précédentes, dans lequel les itérations sont réalisées jusqu'à ce qu'un nombre total N de mises à jour incrémentielles contenues dans le document d'entrée ($d_0$) est atteint.

**7.** Système de traitement de données pour la détection de faux numériques dans des documents PDF, comprenant des moyens pour mettre en œuvre le procédé informatique selon l'une quelconque des revendications 1 à 6.

**EP 4 529 648 B1**

8. Support de stockage lisible par ordinateur non transitoire pour la détection de faux numériques dans des documents PDF, comprenant des instructions de code informatique qui, lorsqu'elles sont exécutées par un processeur, amènent le processeur à réaliser le procédé informatique selon l'une quelconque des revendications 1 à 6.

**INPUT DOCUMENT $d_0$ IN PDF FORMAT** (102) ⇒ **RECEIVE INPUT DOCUMENT $d_0$** (104)

**ANALYZE $d_0$ TO DETECT INCREMENTAL UPDATES** (106) ⇒ **INCREMENTAL UPDATES 108** — $IU_1$ / $IU_2$ / ... / $IU_N$

100

**ITERATIVELY SELECT A NUMBER $i$ OF INCREMENTAL UPDATES LAST INCLUDED IN $d_0$** (110)

**REMOVE LAST $i$ INCREMENTAL UPDATES FROM $d_0$ TO OBTAIN A PREVIOUS VERSION $d_i$** (112) ⇒ **PREVIOUS VERSION $d_i$** (114)

**DETECT VISUAL DIFFERENCES BETWEEN $d_0$ AND $d_i$** (116)

**DETECT REGIONS $r_i$ IN $d_0$ AND $d_i$ CONTAINING THE VISUAL DIFFERENCES** (118) ⇒ **REGIONS $r_i$** (120)

**ITERATIONS FINISHED?** (122) — NO / YES

**OUTPUT REGIONS $r_i$** (124)

FIG. 1

FIG. 2

| Service Description | Amount -without VAT- | Quantity | Total Amount |
|---|---|---|---|
| Basic Fee W M-View | 120,00€ | 1 | 120,00€ |
| Basic Fee for additional user accounts | 10,00€ | 0 | 0,00€ |
| Basic Fee W M-Pos | 50,00€ | 0 | 0,00€ |
| Basic Fee W M-Guide | 1000,00€ | 0 | 0,00€ |
| Change of user accounts | 10,00€ | 0 | 0,00€ |
| Transaction Fee T1 | 0,50€ | 14 | 7,00€ |
| Transaction Fee T2 | 0,60€ | 0 | 0,00€ |
| Transaction Fee T3 | 1,28€ | 162 | 207,00€ |
| Transaction Fee T4 | 0,44€ | 0 | 0,00€ |
| Transaction Fee T5 | 0,60€ | 0 | 0,00€ |
| Transaction Fee T6 | 1,50€ | 0 | 0,00€ |
| Transaction Fee G1 | 0,20€ | 0 | 0,00€ |
| Transaction Fee G2 | 0,20€ | 0 | 0,00€ |
| Transaction Fee G3 | 0,30€ | 0 | 0,00€ |
| Transaction Fee G4 | 0,30€ | 0 | 0,00€ |
| Transaction Fee G5 | 0,20€ | 0 | 0,00€ |
| Transaction Fee G6 | 0,20€ | 0 | 0,00€ |
| Summary | | | 334,36€ |
| VAT* | | | 63,53€ |
| Total invoice amount | | | 1397,89€ |

102

EP 4 529 648 B1

FIG. 3

| Service Description | Amount -without VAT- | Quantity | Total Amount |
|---|---|---|---|
| Basic Fee W M-View | 120,00€ | 1 | 120,00€ |
| Basic Fee for additional user accounts | 10,00€ | 0 | 0,00€ |
| Basic Fee W M-Pos | 50,00€ | 0 | 0,00€ |
| Basic Fee W M-Guide | 1000,00€ | 0 | 0,00€ |
| Change of user accounts | 10,00€ | 0 | 0,00€ |
| Transaction Fee T1 | 0,50€ | 14 | 7,00€ |
| Transaction Fee T2 | 0,60€ | 0 | 0,00€ |
| Transaction Fee T3 | 1,28€ | 162 | 207,00€ |
| Transaction Fee T4 | 0,44€ | 0 | 0,00€ |
| Transaction Fee T5 | 0,60€ | 0 | 0,00€ |
| Transaction Fee T6 | 1,50€ | 0 | 0,00€ |
| Transaction Fee G1 | 0,20€ | 0 | 0,00€ |
| Transaction Fee G2 | 0,20€ | 0 | 0,00€ |
| Transaction Fee G3 | 0,30€ | 0 | 0,00€ |
| Transaction Fee G4 | 0,30€ | 0 | 0,00€ |
| Transaction Fee G5 | 0,20€ | 0 | 0,00€ |
| Transaction Fee G6 | 0,20€ | 0 | 0,00€ |
| Summary | | | 334,36€ |
| VAT* | | | 63,53€ |
| Total invoice amount | | | 397,89€ |

114

EP 4 529 648 B1

FIG. 4

## FIG. 5A

## FIG. 5B

```
xref                              % cross-reference section
0 1                               % subsection containing 8 objects numbered consecutively from 0 to 7
0000000000 65535 f                % free entry
2 1
0000000009 00000 n                % in-use entry
7 5
0000000120 00000 n
0000000179 00000 n
0000000364 00000 n
0000000466 00000 n
0000000496 00000 n
```

(506)

```
trailer
 << /Size 10                      % The total number of entries in the file's cross-reference table
    /Root 1 0 R                   % The catalog object for this FDF file
 >>
startxref
625                               % Byte_offset_of_last_cross-reference_section
%%EOF
```

(508)

## FIG. 6A

```
15 0 obj                        % The object stream                                                                                    602
    <<    /Type /ObjStm
        /Length 1856
        /N 3                    % The number of objects in the stream
        /First 24               % The byte offset of the first object
>> stream
11 0 12 547 13 665              % The object numbers and offsets of the objects, relative to the first
...
endstream
endobj

99 0 obj                        % The cross-reference stream
    <<    /Type /XRef
        /Size                   % The number one greater than the highest object number used in this section or in any section for which this is an update.
        /Prev                   % The byte offset from the beginning of the file to the beginning of the previous cross-reference stream.
        /Index [0 32]           % This section has one subsection with 32 objects
        /W [1 2 2]              % Each entry has 3 fields: 1, 2 and 2 bytes in width
        ...
>>stream
    00 0000 FFFF                % "0 65535 f" in a cross-reference table
    ...
    02 000F 0000                % The entry for object 11, the first font
    02 000F 0001                % The entry for object 12, the font descriptor
    02 000F 0002                % The entry for object 13, the second font
    ...
    01 BA5E 0000                % The entry for object 15, the object stream
    ...
endstream
endobj
startxref
    54321                       % The offset of "99 0 obj"
%%EOF
```

EP 4 529 648 B1

FIG. 6B

```
1 0 obj                        % The document root, at offset 23.                    604
   << /Type /Catalog

   ...
   >>endobj

...
%%%%%%%%%%% main cross-reference section %%%%%%%%%%%%%%%

xref                           % The main xref section, at offset 2664
0 100                           % This subsection has entries for objects 0 - 99.
0000000002 65535 f             % Entry for object 0
0000000023 00000 n             % Entry for object 1, the root
0000000003 65535 f             % Entry for object 2 (object stream), marked free in this table
0000000004 65535 f             % Entry for object 3, marked free in this table
0000000005 65535 f

...
0000000000 65535 f             % Entry for object 11 (xref stream), marked free in this table.
0000000045 00000 n             % Entry for object 12, in use.
0000000179 00000 n

...
0000002201 00000 n
trailer
 << /Size 100
    /Root 1 0 R

    ...
 >>
startxref
1 0 obj                        % The document root, at offset 23.
   << /Type /Catalog

   ...
   >>endobj
```

<div align="center">

FIG. 6C

</div>

...

EP 4 529 648 B1

```
%PDF-1.1            % Part 1: Header                                          606

43 0 obj            % Part 2: Linearization parameter dictionary
  << /Linearized 1.0        % Version
    /L 54567                % File length: Length of file in bytes. It must be exactly equal
to the actual. A mismatch indicates that the file is notlinearized and must be treated as
ordinary PDF
    /H [ 475 598 ]          % Primary hint stream offset and length (part 5)
    /O 45                   % Object number of first page's page object (part 6)
    /E 5437                 % Offset of end of first page
    /N 11                   % Number of pages in document
    /T 52786                % Offset of first entry in main cross-reference table (part 11)
  >>
endobj

xref            % Part 3: First-page cross-reference table and trailer
%PDF- 1.1           % Part 1: Header

43 0 obj            % Part 2: Linearization parameter dictionary
  << /Linearized 1.0        % Version
    /L 54567                % File length: Length of file in bytes.
    /H [ 475 598 ]          % Primary hint stream offset and length
    /O 45                   % Object number of first page's page object
    /E 5437                 % Offset of end of first page
    /N 11                   % Number of pages in document
    /T 52786                % Offset of first entry in main cross-reference table
  >>
endobj
```

<p style="text-align:center">FIG. 6D</p>

FIG. 7B

FIG. 7A

Document $d_0$   Document $d_i$

102   114

204

Rasterizer
Module   802

Images
$\{Id_{00}, Id_{01}, ..., Id_{0M}\}$

Images
$\{Id_{i0}, Id_{i1}, ..., Id_{iK}\}$

Page
Synchronizer
Module   804

805

Pairs of Images
$\{Id_{0m1}, Id_{im2}\}, \{Id_{0k1}, Id_{ik2}\}, ...$

Image
Comparator
Module   806

807

Map Image
$\{Im_{i0}, Im_{i1}...Im_{iM}\}$

Map
Cleaning
Module   808

809

Clean Map Image
$\{Ic_{i0}, Ic_{i1}...Ic_{iM}\}$

Region
Detection
Module   810

120

Regions $r_l$

FIG. 8

807

FIG. 9

809

120

FIG. 10

FIG. 11

FIG. 12

EP 4 529 648 B1

| Service Description | Amount -without VAT- | Quantity | Total Amount |
|---|---|---|---|
| Basic Fee W M-View | 120,00€ | 1 | 120,00€ |
| Basic Fee for additional user accounts | 10,00€ | 0 | 0,00€ |
| Basic Fee W M-Pos | 50,00€ | 0 | 0,00€ |
| Basic Fee W M-Guide | 1000,00€ | 0 | 0,00€ |
| Change of user accounts | 10,00€ | 0 | 0,00€ |
| Transaction Fee T1 | 0,50€ | 14 | 7,00€ |
| Transaction Fee T2 | 0,60€ | 0 | 0,00€ |
| Transaction Fee T3 | 1,28€ | 162 | 207,00€ |
| Transaction Fee T4 | 0,44€ | 0 | 0,00€ |
| Transaction Fee T5 | 0,60€ | 0 | 0,00€ |
| Transaction Fee T6 | 1,50€ | 0 | 0,00€ |
| Transaction Fee G1 | 0,20€ | 0 | 0,00€ |
| Transaction Fee G2 | 0,20€ | 0 | 0,00€ |
| Transaction Fee G3 | 0,30€ | 0 | 0,00€ |
| Transaction Fee G4 | 0,30€ | 0 | 0,00€ |
| Transaction Fee G5 | 0,20€ | 0 | 0,00€ |
| Transaction Fee G6 | 0,20€ | 0 | 0,00€ |
| Summary | | | 334,36€ |
| VAT* | | | 63,53€ |
| Total invoice amount | | | 1397,89€ |

120

212

{
"Detector": IU_MODIFIED",
"height": 15,
"position_x": 522,
"position_y": 201,
"previous_values": [
"1397,89",
"397,89"
],

FIG. 13

## REFERENCES CITED IN THE DESCRIPTION

**Patent documents cited in the description**

- US 2006117182 A1
- US 2008177799 A1
- CN 113806292 A

**Non-patent literature cited in the description**

- **SUZUKI, S.** ; **ABE, K.** Topological Structural Analysis of Digitized Binary Images by Border Following. *CVGIP*, 1985, vol. 30 (1), 32-46